# EUROPÄISCHE PATENTSCHRIFT

(11) **EP 0 513 489 B1**
(45) Veröffentlichungstag und Bekanntmachung des Hinweises auf die Patenterteilung: **21.02.1996**
(21) Anmeldenummer: 92104165.3
(22) Anmeldetag: 11.03.1992
(51) Int. Cl.: E04G 7/30, E04G 7/20

(54) **Aufstockbarer Gerüstrahmen**
Stackable scaffolding frames
Cadre d'échafaudage à superposer

(30) Priorität: 15.05.1991 DE 9106022 U
(43) Veröffentlichungstag der Anmeldung: 19.11.1992
(73) Patentinhaber: Österreichische DOKA Schalungstechnik Gesellschaft m.b.H., A-3300 Amstetten (AT)
(72) Erfinder:
(74) Vertreter: Füchsle, Klaus, Dipl.-Ing.

(56) Entgegenhaltungen:
- WO-A-83/03868
- FR-A- 2 480 837
- GB-A- 1 600 019
- GB-A- 2 189 566

## Beschreibung

Die Erfindung betrifft einen aufstockbaren Gerüstrahmen, mit Vertikalständern, die als Hohlprofil ausgebildet sind, mit Verbindungsstreben, die an den Vertikalständern befestigt sind, und mit wenigstens einer Verbindungshülse, die in einen Vertikalständer eingeführt und in diesem in einer bestimmten Höhenstellung durch einen Sicherungsbolzen festlegbar ist, welche durch eine in der Umfangswand der Verbindungshülse vorgesehene Öffnung und eine mit dieser fluchtenden Öffnung im Vertikalständer geführt ist, wobei die Verbindungshülse in ihrer Umfangswand mindestens eine Umfangsaufweitung aufweist.

Derartige Gerüstrahmen, die aus WO 83/03868 bekannt sind, werden verwendet, um beispielsweise bei einem Unterbau für Deckenschalungen aus wenigen Einzelteilen das erforderliche Untergerüst aufbauen zu können. Als Kupplungsstücke dienende Verbindungshülsen werden dabei in die Vertikalständer eines Grundrahmens eingesetzt und so fixiert, daß ein Teil der Verbindungshülse aus dem Vertikalständer herausragt, um darauf einen weiteren Vertikalständer aufsetzen zu können. Zum Fixieren der Verbindungshülse werden beispielsweise Federbolzen verwendet, die durch fluchtende Öffnungen in der Verbindungshülse und den Vertikalständer geführt sind, wobei ein seitlich am Bolzen angesetzter gekrümmter Federbügel den Vertikalständer teilweise umgreift und so verhindert, daß der Bolzen versehentlich oder auch durch Erschütterungen am Gerüst verloren geht.

Zum Fixieren werden auch Fallstecker eingesetzt, bei denen an einem langgestreckten Bolzen, der durch die Öffnungen in Verbindungshülse und Vertikalständer geführt wird, ein schwerer, sich an die Außenseite des Vertikalständers anlegender und diesen teilweise umgreifender Abschnitt vorgesehen ist, der den Fallstecker durch sein Eigengewicht in seiner Lage hält.

Im allgemeinen wird jedes Rahmenteil durch einen separaten Bolzen oder Stecker gesichert. Es kann jedoch auch ein sogenannter Doppeldorn verwendet werden, der gleichzeitig zwei aneinandergrenzende Rahmenteile hält. Hier werden die durch die Öffnungen greifenden Bolzen oftmals durch einen Federvorstecker, Draht oder Nagel zusätzlich gesichert, der durch eine Bohrung im Endbereich der Bolzen geführt ist. Weitere Sicherungsmaßnahmen für Bolzen bestehen in aus dem Bolzen abschwenkbaren Stiften, die in eine vertikale Stellung gebracht werden und so die Bewegung des Bolzens sperren, oder in auf den Bolzen angeordneten Ansätzen, deren Widerstand beim Durchführen der Bolzen überwunden werden muß.

Um das Problem der verlierbaren Bolzen überhaupt zu vermeiden, ist eine Verbindungshülse verwendet worden, die im oberen Bereich angeschrägt ist und selbst einen Vorsprung aufweist, der in eine entsprechende Öffnung im Vertikalständer eingreift, wenn dieser schräg auf die Verbindungshülse des unteren Vertikalständers gesetzt und aufgerichtet wird.

Eine andere Verbindungshülse besorgt das Verriegeln durch einfaches Verdrehen des Ständers.

Es sind schließlich auch separate Verbindungshülsen bekannt, die auf den Vertikalständer aufgesteckt werden und das zweite Gerüst ebenfalls in sich aufnehmen.

Bei diesen aufstockbaren Gerüstrahmen liegt ein Nachteil darin, daß eine Vielzahl von Komponenten benötigt wird, wobei auf einer Baustelle immer die Gefahr besteht, daß diese Komponenten verloren gehen.

Es ist daher die Aufgabe der Erfindung, einen aufstockbaren Gerüstrahmen zu schaffen, bei dem sämtliche Komponenten unverlierbar sind, so daß die für das Baugerüst notwendigen Teile immer verfügbar sind.

Diese Aufgabe wird von einem aufstockbaren Gerüstrahmen der eingangs genannten Gattung mit den Merkmalen des Anspruchs 1 gelöst.

Vorteilhafte Ausgestaltungen sind Gegenstand der Unteransprüche.

Nach einem besonders bevorzugten Ausführungsbeispiel weist die Verbindungshülse in ihrer Umfangswand in einem ersten Endabschnitt einen ersten Satz sich radial erstreckender Umfangsaufweitungen in Form von Vorsprüngen und in einem axialen Abstand davon einen zweiten Satz sich radial erstreckender Vorsprünge auf; weiterhin ist der Vertikalständer an jedem seiner Enden mit einem Profilabschluß als Anschlag für derartige Vorsprünge versehen, wobei jeder Profilabschluß die Profilöffnung kreisringförmig abdeckt und dabei sein Innenkreisdurchmesser dem Außendurchmesser der Verbindungshülse ohne Vorsprünge entspricht; ferner ist der Sicherungsbolzen mit einer Feder versehen, welche den Sicherungsbolzen in seiner in den Öffnungen von Vertikalständer und Verbindungshülse eingerasteten Position am Vertikalständer hält.

Die Verbindungshülse wird ständig innerhalb des Vertikalständers gehalten und bedarfsweise bis zum Anschlag des zweiten Satzes sich radial erstreckender Vorsprünge aus dem Vertikalständer gezogen. In dieser Anschlagstellung erfolgt die Sicherung durch den Sicherungsbolzen. Dieser wird durch die Feder am Vertikalständer gehalten. Insgesamt sind damit alle für das Aufstocken notwendigen Teile unverlierbar mit dem Gerüstrahmen bzw. dem jeweiligen Vertikalständer verbunden. Der erste Satz von Vorsprüngen hält die Verbindungshülse am unteren Ende des Vertikalständers völlig in dessen Innerem. Damit kann ohne Behinderung am unteren Ende der Vertikalstrebe eine Gewindespindel zum Einrichten des Gerüsts angesetzt werden. Durch Ausrasten des Sicherungsbolzens und Einschieben der Verbindungshülse in das Vertikalprofil kann auch von der zweiten Seite eine Spindel oder ähnliches eingeschoben werden.

Vorteilhaft ist die Verbindungshülse an ihrem zweiten Endabschnitt kegelstumpfförmig ausgebildet, wodurch das Aufsetzen eines weiteren Vertikalständers erleichtert wird.

Es hat sich als ausreichend erwiesen, wenn sowohl der erste Satz von Vorsprüngen als auch der zweite Satz von Vorsprüngen jeweils zwei einander gegenüberliegende Flügel umfaßt.

Für speziell ausgebildete Vertikalständer mit geeigenten Innenprofilen können diese Flügel als Führungen der Verbindungshülse in dem Vertikalständer dienen, wenn sie in axialer Richtung der Verbindungshülse miteinander ausgerichtet sind.

Die Feder, welche den Sicherungsbolzen sichert, kann im Bereich gegenüber dem Sicherungsbolzen einen Bügel aufweisen, dessen größter Abstand vom Außenumfang des Vertikalständers im wesentlichen gleich der Länge des Sicherungsbolzens ist. Dann kann der Sicherungsbolzen aus seiner Verriegelungsstellung entfernt werden, indem Druck auf den Bügel ausgeübt wird, bis dieser selbst an den Vertikalständer anschlägt.

Die Verbindungshülse kann so im Vertikalständer eingesetzt sein, daß ihr zweiter Endbereich, auf den das weitere Gerüst aufgesetzt werden soll, entweder am oberen oder am unteren Ende des Vertikalständers heraustreten kann.

Die entsprechende Anordnung der Verbindungshülse vorausgesetzt, kann daher grundsätzlich jeder Gerüstrahmen der vorliegenden Erfindung einen weiteren Gerüstrahmen tragen oder selbst auf einen Gerüstrahmen aufgesetzt werden. Je ein Profilabschlußstück am unteren bzw. oberen Profilende verhindert das Herausfallen der Verbindungshülse aus dem Vertikalständer. Es kann zugleich ein Auflager bilden. Dadurch kann am Ende der jeweiligen Vertikalstütze gut eine Einrichtspindel angesetzt und mit geringem Kraftaufwand bedient werden. Gleichzeitig wird durch das Profilabschlußstück der Kantenbereich des Vertikalständers vor Beschädigung geschützt.

Im folgenden soll die Erfindung lediglich beispielhaft anhand der beigefügten Zeichnung näher beschrieben werden. Es zeigt:
- Fig. 1: eine Ansicht eines erfindungsgemäßen Gerüstrahmens im Bereich der Verbindungsstelle für einen weiteren Gerüstrahmen,
- Fig. 2a: eine Detailansicht der Verbindungshülse in einer Seitenansicht,
- Fig. 2b: die um 180° um die Längsachse verdrehte Seitenansicht der Verbindungshülse aus Fig. 2a,
- Fig. 2c: eine Ansicht der Verbindungshülse von unten,
- Fig. 3a: eine Querschnittsansicht des Vertikalständers mit Verbindungshülse im Bereich des Sicherungsbolzens mit Feder bei eingerastetem Sicherungsbolzen,
- Fig. 3b: eine Querschnittsansicht entsprechend Fig. 3a mit ausgerastetem Sicherungsbolzen,
- Fig. 4: eine Schrägrißzeichnung des Profilabschlußstückes,
- Fig. 5a: eine Teilansicht eines aufzusetzenden Gerüstrahmens im Bereich der Verbindungsstelle, und
- Fig. 5b: eine Teilansicht zweier aufeinandergesetzter Gerüstrahmen.

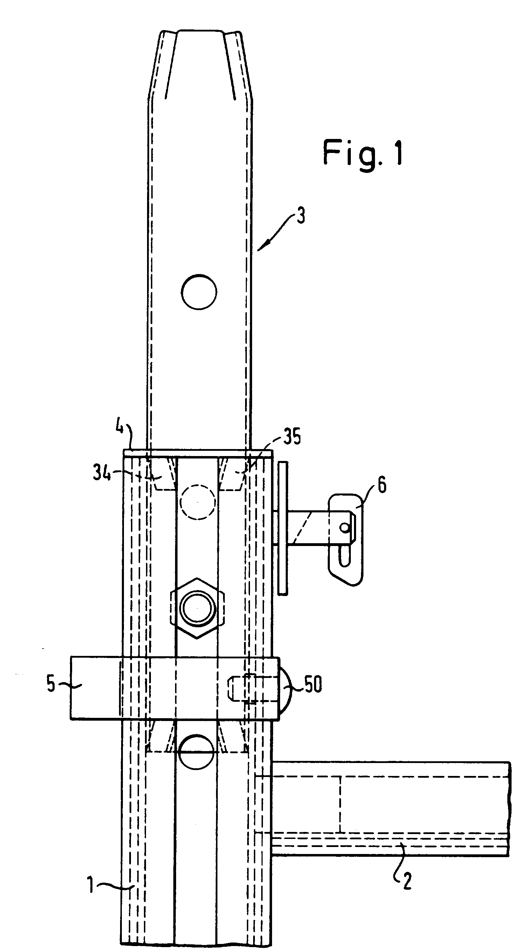

Fig. 1 zeigt den oberen Bereich eines Vertikalständers 1, an dessen oberem Ende ein Profilabschluß 4 angebracht ist. In den Vertikalständer 1 ist eine Verbindungshülse 3 eingesetzt, die nur so weit aus dem Vertikalständer 1 gezogen werden kann, bis Umfangsausweitungen der Verbindungshülse darstellende Flügel 34, 35 an der Unterseite des Profilabschlusses 4 zu liegen kommen. In dieser Stellung wird die Verbindungshülse 3 durch einen Sicherungsbolzen 50 gehalten, welcher wiederum durch eine den Vertikalständer 1 umgreifende Feder 5 unverlierbar an diesem festgelegt ist. Eine Horizontalstrebe 2 ist am Vertikalständer 1 in einer Höhe befestigt, die zusammen mit einer weiteren Horizontalstrebe sowie einer weiteren Vertikalstrebe einen Gerüstrahmen bildet.

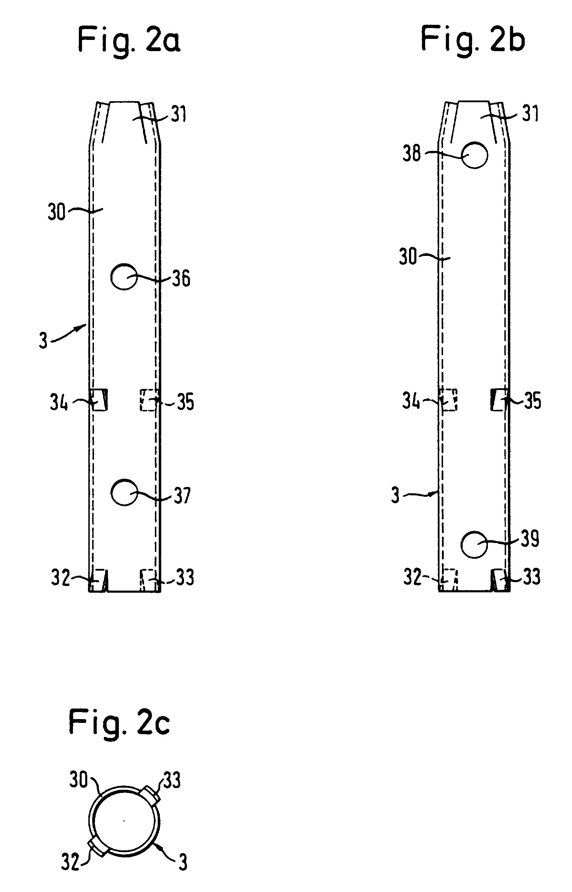

Die Verbindungshülse 3 wird mit Bezug auf den Figurensatz 2 im Detail beschrieben. Fig. 2a zeigt eine Seitenansicht der Verbindungshülse 3, die aus einem hohlzylindrischen Hülsenkörper 30 mit einem kegelstumpfförmigen oberen Endabschnitt 31 besteht. Dieser Endabschnitt 31 kann beispielsweise durch Falten ausgeformt werden. Im unteren Endabschnitt des Hülsenkörpers 30 sind zwei einander gegenüberliegende Flügel 32, 33 ausgestanzt und so nach außen gebogen, daß jeder Flügel einen radial sich erstreckenden Vorsprung bildet. Die Flügel verhindern ein teilweises Herausgleiten der Verbindungshülse 3 aus dem unteren Ende des Vertikalständers, was für manche Anwendungszwecke wünschenswert ist. Im axialen Abstand davon, etwa im Mittelbereich der Verbindungshülse 3, sind zwei weitere Flügel 34, 35 vorgesehen, die ebenfalls ausgestanzt und so geformt sind, daß sie die für die Anlage an dem Profilabschluß 4 erforderlichen Vorsprünge der Verbindungshülse 3 bilden. Dabei öffnen sich die Flügel 32, 33 nach unten, die Flügel 34, 35 nach oben. Jeweils zwei der Flügel 32, 34 bzw. 33, 35 sind in axialer Richtung der Verbindungshülse 3 zueinander ausgerichtet. Etwa mittig zwischen den Flügelpaaren 32, 33 bzw. 34, 35 ist eine Öffnung 37 vorgesehen; eine zweite Öffnung 36 befindet sich oberhalb der Flügel 34, 35. Auch die Öffnungen 36, 37 sind in axialer Richtung der Verbindungshülse 3 miteinander ausgerichtet. Sie können mit Öffnungen im Vertikalständer 1 zur Deckung gebracht und zur Höhenfeststellung der Verbindungshülse 3 verwendet werden.

Fig. 2b ist eine um 180° gedrehte Seitenansicht der Verbindungshülse 3 aus Fig. 2a. Unterhalb des kegelstumpfförmigen Endabschnittes 31 ist eine dritte Öffnung 38 im Hülsenkörper 30 vorgesehen, die in axialer Richtung der Verbindungshülse 3 mit einer vierten Öffnung 39 ausgerichtet ist, die am unteren Ende des Hülsenkörpers 30 den Flügeln 32, 33 benachbart vorgesehen ist. Insbesondere diese Öffnungen 38, 39 dienen zur Höheneinstellung der Verbindungshülse 3 und zum Festlegen eines aufgesetzten Gerüstrahmens.

Fig. 2c zeigt eine Ansicht der Verbindungshülse 3 von unten, wobei zu erkennen ist, daß die Flügel 32, 33 einander gegenüberliegend angeordnet sind.

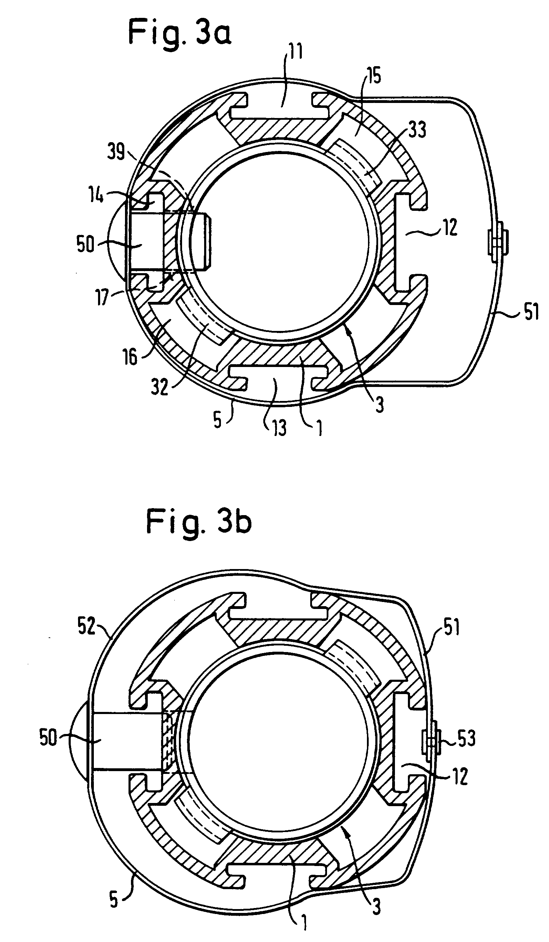

Fig. 3 verdeutlicht das Zusammenwirken von Sicherungsbolzen 50, Feder 5 und Verbindungshülse 3 mit einem Vertikalständer 1, der auf spezielle Weise profiliert ist. Der Vertikalständer 1 weist dabei an seinem Außenumfang vier in axialer Richtung verlaufende Schienen 11, 12, 13, 14 auf, in die Zusatzteile für das Gerüst, beispielsweise Kopplungsstücke oder dergleichen, eingehängt werden können. Diese Schienen, die jeweils im Winkelabstand von 90° zueinander liegen, sind so in das Hohlprofil des Vertikalständers 1 eingearbeitet, daß sich zwischen zwei Schienen 11, 12 bzw. 12, 13 usw. eine im Inneren des Vertikalständers 1 verlaufende Längsnut bildet. In zwei dieser Längsnuten 15, 16, die einander gegenüberliegen, ragen die Flügel 32, 33 (bzw. 34, 35) der Verbindungshülse 3 hinein, so daß die Verbindungshülse 3 gegen Verdrehen gesichert in dem Vertikalständer 1 gleitend geführt ist.

In Fig. 3a ist der Sicherungsbolzen 50 im Bereich der Schiene 14 angeordnet und greift durch miteinander fluchtende Öffnungen 17, 39 im Vertikalständer 1 bzw. in der Verbindungshülse 3. Der Sicherungsbolzen 50 ist dabei an einer Feder 5 befestigt, die den Vertikalständer 1 auf etwa 3/4 seines Umfanges umgreift und in einem Bügel 51 mündet, der gegenüber dem Sicherungsbolzen 50 angeordnet ist. Der Sicherungsbolzen 50 wird durch die Kraft der Feder 5 in seiner Verriegelungsstellung gehalten.

Fig. 3b zeigt die Position der Feder 5 für das Entriegeln des Sicherungsbolzens 50. Dazu wird der Bügel 51 gegen den Vertikalständer 1 gedrückt, bis er im Bereich der Schiene 12 an diesem anliegt. Damit verschiebt sich der kreisförmige Bereich 52 der Feder 5 vom Vertikalständer 1 weg, so daß der Sicherungsbolzen 50, der mit der Feder 5 mitgeführt wird, die Verbindungshülse 3 freigibt, nicht jedoch die Öffnung 17 des Vertikalständers verläßt und dadurch auch in entsicherter Stellung vertikal am Vertikalständer nicht verschiebbar ist. Durch den größten Abstand des Bügels 51 zum Vertikalständer 1 ist festgelegt, wie weit der Sicherungsbolzen 50 mitgeführt werden kann. Dieser größte Abstand, der notwendig ist, um den Sicherungsbolzen 50 vollständig aus der Verriegelungsstellung zu entfernen, hängt von den baulichen Gegebenheiten des Vertikalständers ab und ist geeignet anzupassen. Der Bügel 51 ist in diesem Ausführungsbeispiel durch zwei übereinander gelegte Endabschnitte der Feder selbst gebildet, wobei die Enden zueinander durch einen Niet, Stift oder durch eine Schraube fixiert sind. Diese Verbindungsstelle 53 kann auch so ausgestaltet sein, daß durch sie die Spannung der Feder 5 einstellbar wird. Dazu können beispielsweise in den übereinanderliegenden Enden Langlöcher vorgesehen sein, so daß die relative Position dieser Endabschnitte wahlweise festlegbar ist.

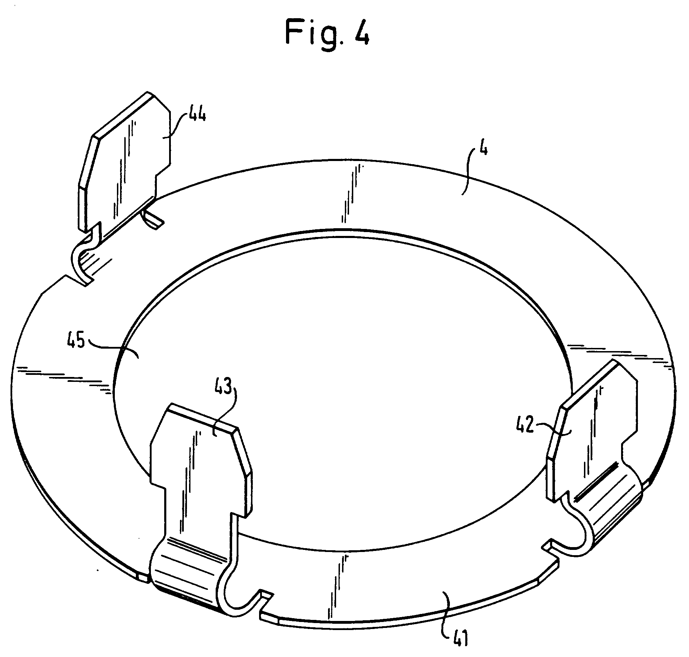

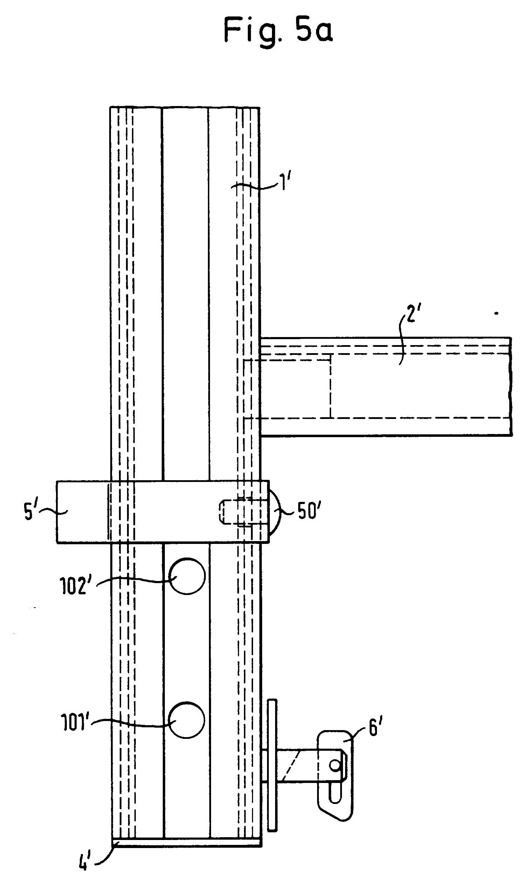

Fig. 4 zeigt eine Ausführungsform eines Profilabschlusses, der zwar das Herausgleiten der Verbindungshülse 3 aus dem Vertikalständer verhindert, durch den jedoch die Verbindungshülse 3 herausragen kann, so daß ein weiterer Vertikalständer anzuschließen ist. Dazu ist der Profilabschluß 4 im wesentlichen kreisringförmig ausgebildet. Dabei entspricht der Innendurchmesser der Öffnung 45 dem Außendurchmesser der Verbindungshülse 3 ohne Vorsprünge 32-35. Der ringförmige Abschnitt 41 des Profilabschlusses setzt sich in drei Laschen 42, 43, 44 fort, welche sich am Ende T-förmig erweitern. Bei der Montage reichen die Laschen 41, 43, 44 in drei der vier axial laufenden Schienen 11, 12, 13, 14 des Vertikalständers 1. Der Profilabschluß 4 wird nach Einbringen der Verbindungshülse 3 durch Einschieben in den Vertikalständer 1 montiert und durch geeignete Maßnahmen wie Verpressen oder Verschrauben gegen Herausfallen gesichert. Fig. 5a zeigt eine Teilansicht eines aufzusetzenden Gerüstrahmens im Bereich einer Verbindungsstelle. Am unteren Ende des Vertikalständers 1' ist ein Profilabschluß 4', wie in Fig. 4 beschrieben, vorgesehen. In unmittelbarer Nähe des Profilabschlusses 4' im unteren Bereich des Vertikalständers 1' befindet sich eine selbstsichernde Klinke 6'. Weiterhin sind zwei in axialer Richtung ausgerichtete Öffnungen 101', 102' vorgesehen, die jedenfalls mit entsprechenden Öffnungen an einer Verbindungshülse fluchten. Oberhalb der zweiten Öffnungen 102' ist ein Sicherungsbolzen 50' mit Feder 5' angeordnet, weiter darüber eine Horizontalstrebe 2'.

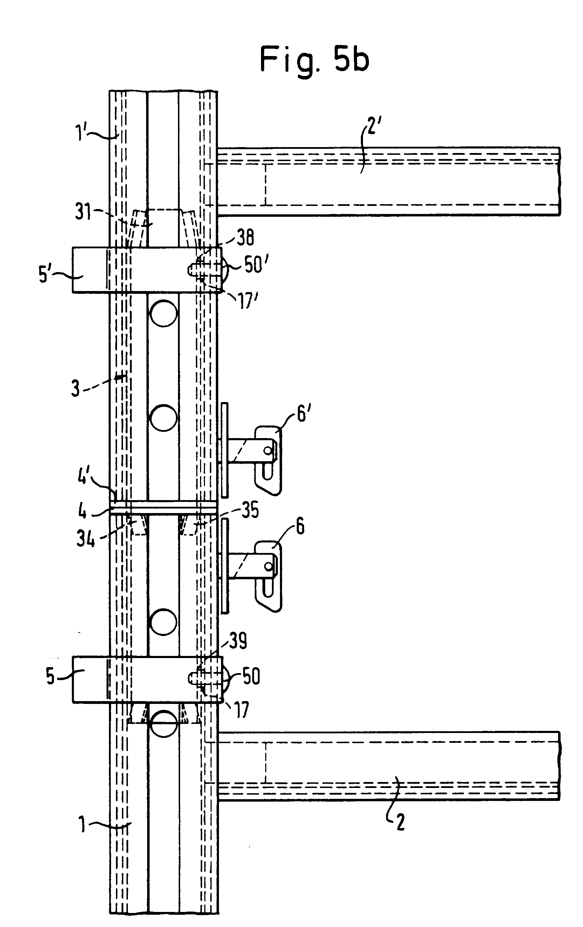

Fig. 5b zeigt nun diesen Gerüstrahmen, wie er auf einen Gerüstrahmen nach Fig. 1 aufgesetzt ist. Die Verbindungshülse 3 ist soweit aus dem unteren Vertikalständer 1 gezogen, daß die Flügel 34, 35 an den Profilabschluß 4 zur Anlage kommen. In dieser Stellung wird die Verbindungshülse 3 im unteren Vertikalständer 1 mit Hilfe des Sicherungsbolzens 50 fixiert, der durch Öffnungen 17, 39 im Vertikalständer 1 bzw. der Verbindungshülse 3 greift. Der obere Vertikalständer 1' ist an seinem unteren Ende mit einem Profilabschluß 4' versehen, durch den hindurch die Verbindungshülse 3 in den oberen Vertikalständer 1 eingeführt wird. Dabei erleichtert die kegelstumpfförmige Ausbildung des Endabschnittes 31 der Verbindungshülse 3 das Aufsetzen. Am oberen Vertikalständer 1 wird die Verbindungshülse 3 durch einen Sicherungsbolzen 50' gesichert, der durch Öffnungen 17', 38 des oberen Vertikalständers 1' bzw. der Verbindungshülse 3 greift. Beide Sicherungsbolzen 50, 50' werden durch die entsprechend vorgesehenen Feder 5, 5' gehalten. Die gesamte Kopplungseinrichtung für die beiden Gerüstrahmen liegt zwischen den Horizontalstreben 2, 2' der Gerüstrahmen.

Mit der Erfindung steht damit ein einfach zu handhabender aufstockbarer Gerüstrahmen zur Verfügung, dessen sämtliche Teile unverlierbar miteinander verbunden sind. Die Verbindungshülse kann ganz in das Innere des Vertikalständers hineingeschoben werden, so daß in den Vertikalständer ohne weiteres eine Spindel für den Höhenausgleich des Gerüstes einsetzbar ist.

## Patentansprüche

1. Aufstockbarer Gerüstrahmen,
- mit vertikalständern (1), die als Hohlprofil ausgebildet sind und
- mit wenigstens einer Verbindungshülse (3), die in einen Vertikalständer eingeführt und in diesem in einer bestimmten Höhenverstellung durch einen Sicherungsbolzen (50) festlegbar ist, welcher durch eine in der Umfangswand der Verbindungshülse vorgesehene Öffnung und eine mit dieser fluchtenden Öffnung im Vertikalständer geführt ist, wobei die Verbindungshülse (3) in ihrer Umfangswand (30) mindestens eine Umfangsaufweitung (34; 35) aufweist,
dadurch **gekennzeichnet**,
- daß der Vertikalständer (1) an jedem seiner Enden mit einem Profilabschluß (4) als Anschlag für diese Umfangsaufweitung versehen ist, wobei jeder Profilabschluß den Profilquerschnitt des Vertikal ständers (1) kreisringförmig abdeckt und dabei der Innenkreisdurchmesser des Profilabschlusses (4) dem Außenkreisdurchmesser der Verbindungshülse (3) ohne Umfangsaufweitungen (34; 35) im wesentlichen entspricht, und
- daß der Sicherungsbolzen (50) mit einem Bügel (5) versehen ist, welcher den Sicherungsbolzen in seiner in den Öffnungen (17, 39) von Vertikalständer (1) und Verbindungshülse (3) eingerasteten Position am Vertikalständer (1) hält.

2. Gerüstrahmen nach Anspruch 1, dadurch gekennzeichnet, daß die Verbindungshülse (3) an ihrem zweiten Endabschnitt (31) kegelstumpfförmig ausgebildet ist.

3. Gerüstrahmen nach Anspruch 1 oder 2, dadurch gekennzeichnet, daß ein erster Satz von die Umfangsaufweitungen darstellenden Vorsprüngen zwei einander gegenüberliegende Flügel (32, 33) umfaßt.

4. Gerüstrahmen nach Anspruch 3, dadurch gekennzeichnet, daß ein zweiter Satz von die . Umfangsaufweitungen darstellenden Vorsprüngen zwei einander gegenüberliegende Flügel (34, 35) umfaßt.

5. Gerüstrahmen nach Anspruch 4, dadurch gekennzeichnet, daß die Vorsprünge des ersten Satzes mit entsprechenden Vorsprüngen des zweiten Satzes in axialer Richtung der Verbindungshülse (3) ausgerichtet sind.

6. Gerüstrahmen nach einem der Ansprüche 3 bis 5, dadurch gekennzeichnet, daß die Flügel (32, 33, 34, 35) aus der Seitenwand (30) der Verbindungshülse (3) ausgestanzt und hervorgeklappt sind.

7. Gerüstrahmen nach Anspruch 3 oder 4, dadurch gekennzeichnet, daß wenigstens einer der Sätze radial sich erstreckender Vorsprünge als umlaufender Ansatz ausgebildet ist.

8. Gerüstrahmen nach einem der vorhergehenden Ansprüche, dadurch gekennzeichnet, daß eine bügelförmige Feder (5, 51) des Sicherungsbolzens (50) den Vertikalständer (1) in Umfangsrichtung umgreift.

9. Gerüstrahmen nach Anspruch 8, dadurch gekennzeichnet, daß die Feder (5) des Sicherungsbolzens (50) im Bereich gegenüber dem Sicherungsbolzen einen Bügel (51) aufweist, dessen größter Abstand vom Außenumfang des Vertikalständers (1) im wesentlichen gleich der Länge des Sicherungsbolzens ist.

10. Gerüstrahmen nach einem der vorhergehenden Ansprüche, dadurch gekennzeichnet, daß der Anschlag als ein den Vertikalständer (1) teilweise verschließendes Profilabschlußstück (41) ausgebildet ist.

## Claims

1. Scaffold frame to which storeys can be added,
- with vertical posts (1) which are designed as hollow profiles and
- with at least one connecting sleeve (3) which is introduced into a vertical post and can be fixed therein at a given height by a locking bolt (50) which is passed through an opening provided in the peripheral wall of the connecting sleeve and an opening aligned therewith in the vertical post, wherein the connecting sleeve (3) in its peripheral wall (30) comprises at least one peripheral widening (34; 35),
characterised in that
- the vertical post (1) is provided at each of its ends with a profile closure (4) as a stop for this peripheral widening, wherein each profile closure annularly covers the profile cross-section of the vertical post (1) and in the process the inside circle diameter of the profile closure (4) essentially corresponds to the outside circle diameter of the connecting sleeve (3) without peripheral widenings (34; 35), and
- the locking bolt (50) is provided with a U-shaped member (5) which keeps the locking bolt in its position on the vertical post (1), latched in the openings (17, 39) of vertical post (1) and connecting sleeve (3).

2. Scaffold frame according to claim 1, characterised in that the connecting sleeve (3) is frustoconically shaped at its second end section (31).

3. Scaffold frame according to claim 1 or 2, characterised in that a first set of projections forming the peripheral widenings includes two mutually opposed wings (32, 33).

4. Scaffold frame according to claim 3, characterised in that a second set of projections forming the peripheral widenings includes two mutually opposed wings (34, 35).

5. Scaffold frame according to claim 4, characterised in that the projections of the first set are aligned with corresponding projections of the second set in the axial direction of the connecting sleeve (3).

6. Scaffold frame according to any of claims 3 to 5, characterised in that the wings (32, 33, 34, 35) are punched out of the side wall (30) of the connecting sleeve (3) and bent forwards.

7. Scaffold frame according to claim 3 or 4, characterised in that at least one of the sets of radially extending projections is designed as a peripheral attachment.

8. Scaffold frame according to any of the preceding claims, characterised in that a U-shaped spring (5, 51) of the locking bolt (50) encompasses the vertical post (1) in the circumferential direction.

9. Scaffold frame according to claim 8, characterised in that the spring (5) of the locking bolt (50) comprises in the region opposite the locking bolt a U-shaped member (51) of which the maximum distance from the outer circumference of the vertical post (1) is essentially equal to the length of the locking bolt.

10. Scaffold frame according to any of the preceding claims, characterised in that the stop is designed as a profile closure piece (41) partially closing the vertical post (1).

## Revendications

1. Cadre d'échafaudage superposable comprenant,
- des montants verticaux (1) qui sont constitués par des profilés creux, et
- au moins un manchon de raccordement (3) qui est emboîté dans un montant vertical et peut être immobilisé dans ce montant, à une position en hauteur déterminée, par une goupille d'arrêt (50) qui est elle-même passée à travers une ouverture prévue dans la paroi périphérique du manchon de raccordement et à travers une ouverture du montant vertical qui coïncide avec celle-ci, le manchon de raccordement (3) présentant au moins un élargissement périphérique (34 ; 35) dans sa paroi périphérique (30),
caractérisé
- en ce que le montant vertical (1) est muni à chacune de ses extrémités d'une fermeture de profilé (4) servant de butée pour cet élargissement périphérique, chaque fermeture de profilé recouvrant la section du profilé du montant vertical (1) en couronne de cercle, et le diamètre de cercle intérieur de la fermeture de profilé (4) correspondant sensiblement au diamètre du cercle extérieur du manchon de raccordement (3) sans ces élargissements périphériques (34, 35), et
- en ce que la goupille d'arrêt (50) est munie d'un étrier (5) qui retient la goupille d'arrêt sur le montant vertical (1), dans sa position engagée dans les ouvertures (17, 39) du montant vertical (1) et du manchon de raccordement (3).

2. Cadre d'échafaudage selon la revendication 1, caractérisé en ce que le manchon de raccordement (3) présente une forme tronconique dans son deuxième segment terminal (31).

3. Cadre d'échafaudage selon la revendication 1 ou 2, caractérisé en ce qu'un premier jeu de saillies représentant les élargissements périphériques comprend deux languettes mutuellement opposées (32, 33).

4. Cadre d'échafaudage selon la revendication 3, caractérisé en ce qu'un deuxième jeu de saillies représentant les élargissements périphériques comprend deux languettes mutuellement opposées (34, 35).

5. Cadre d'échafaudage selon la revendication 4, caractérisé en ce que les saillies du premier jeu sont alignées sur des saillies correspondantes du deuxième jeu dans la direction axiale du manchon de raccordement (3).

6. Cadre d'échafaudage selon une des revendications 3 à 5, caractérisé en ce que les languettes (32, 33, 34, 35) sont découpées dans la paroi latérale (30) du manchon de raccordement (3) et cambrées.

7. Cadre d'échafaudage selon la revendication 3 ou la revendication 4, caractérisé en ce qu'au moins l'un des jeux de saillies s'étendant radialement est constitué par une collerette périphérique.

8. Cadre d'échafaudage selon une des revendications précédentes, caractérisé en ce qu'un ressort (5, 51) en forme d'étrier de la goupille d'arrêt (50) entoure le montant vertical (1) dans la direction circonférentielle.

9. Cadre d'échafaudage selon la revendication 8, caractérisé en ce que, dans la région située à l'opposé de la goupille d'arrêt, le ressort (5) de la goupille d'arrêt (50), présente un étrier (51) dont la distance d'écartement maximale par rapport à la périphérie extérieure du montant vertical (1) est sensiblement égale à la longueur de la goupille d'arrêt.

10. Cadre d'échafaudage selon une des revendications précédentes, caractérisé en ce que la butée est constituée par un élément de fermeture de profilé (41) qui ferme partiellement le montant vertical (1).
